# EUROPEAN PATENT APPLICATION

(11) **EP 1 707 681 A1**
(43) Date of publication of application: **04.10.2006**
(21) Application number: 04807660.8
(22) Date of filing: 24.12.2004
(51) Int. Cl.: E02B 5/00, E02B 5/02, E02B 13/00, E03F 5/04

(54) **BLOCK STRUCTURE FOR GUTTER, WATER CHANNEL FORMED OF BLOCK STRUCTURE FOR THE GUTTER, AND METHOD OF MANUFACTURING BLOCK THE STRUCTURE FOR GUTTER**

(30) Priority: 26.12.2003 JP 2003435118
(71) Applicant: Seinan Industry Corporation, Morioka-shi Iwate 0200866 (JP)
(72) Inventor: KO, Higashi, Morioka-shi, Iwate 0200866 (JP)
(74) Representative: Liebetanz, Michael
(86) International application number: PCT/JP2004/019303
(87) International publication number: WO 2005/064087

(57) **Abstract**

A gutter block structure of the present invention has a configuration in which a vegetable fiber layer made of palm fibers or the like is integrally attached to an inner surface of a water-permeable concrete material, sidewall surfaces which serve as the inner surface are formed into a stepped shape, and a bottom surface which serves as the inner surface is formed into an irregular shape. Further, both the sidewalls are formed into a curved shape or S-shape. Thus, when a water channel is formed by the gutter block structures, the supply and drain of water between the water channel and the surrounding soil is enabled, the flow velocity of water can be reduced, and zones with different flow velocities can be provided. Thus, an environment at the water channel and around the water channel can be closer to a natural condition, and an environment for growing underwater creatures can be brought into a fairly good condition.

## Description

### Technical Field

The present invention relates to a gutter block structure used in, for example, a drainage canal or irrigation canal, and a water channel constructed by the combined gutter block structures, as well as a method of manufacturing the gutter block structure.

### Background Art

Gutter blocks are widely used to construct, for example, drainage canals or irrigation canals. Normally, the gutter block is made of reinforced concrete, and has a V-shaped, U-shaped or U-shaped section, for example. An inner surface of the gutter block is finished in a smooth surface which is an exposed concrete surface so as to reduce the resistance of flowing water.

The gutter blocks are arranged on a construction site, and coupled and then installed in an extending state so that a water channel is constructed. Therefore, the water channel is linearly constructed.

Owing to the inner surface and its sidewalls of the water channel constructed by use of the gutter blocks, drainage or irrigation water can be smoothly passed, and durability for resisting water pressure can be obtained. However, this does not necessarily provide a good living environment for microorganisms, algae, aquatic insects, fish, other small vertebrates, etc. which are living in water and at the water's edge.

For example, it is becoming impossible to find fireflies and dragonflies that could be seen in large numbers before the gutters are constructed by the above-mentioned gutter blocks. Moreover, there is also a significant decrease of aquatic insects, fish such as medakas, and other vertebrates.

It is considered that such a decrease of the aquatic insects and the like is caused by the deterioration of water quality due to the outflow of a large amount of domestic drainage and feces of domestic animals and so on into the gutters and by the creation of environments difficult for microorganisms and algae and so on that serve as prey to propagate.

Furthermore, it has been pointed out that the sharp decrease of fireflies is brought about, for example, not only by the above-mentioned causes but also by the fact that snails which are the preys of larvae of the fireflies do not easily grow and propagate in the gutters with the exposed concrete surface and the fact that it is difficult for the larvae of the fireflies to crawl up the concrete side surfaces and the larvae therefore end up their lives on the land without becoming imagoes. The side surfaces of the gutter blocks which are the exposed concrete surfaces are finished in surfaces which also make it difficult for the larvae of frogs and dragonflies or small vertebrates and so on to crawl up.

It is an object of the present invention to provide a gutter block structure, and a water channel constructed by combining the gutter block structures, as well as a method of manufacturing the gutter block structure which make it possible to obtain an environment suitable for growing aquatic insects, microorganisms, algae, fish, other small vertebrates, etc. and which enable the sharing of water and soil therearound and the velocity adjustment of a water flow.
Patent document 1: Japanese Patent Publication Laid-open No. 2001-3343

### DISCLOSURE OF THE INVENTION

A gutter block structure of the present invention solves the foregoing problems, and has a configuration in which a vegetable fiber layer is integrally attached to an inner surface of a water-permeable concrete material which serves as a water channel.

Furthermore, in the gutter block structure of the present invention, an inorganic material and/or an organic material are/is used for a bonding material to form the concrete material.

Furthermore, in the gutter block structure of the present invention, an aggregate constituting the concrete material is a lightweight aggregate.

Furthermore, in the gutter block structure of the present invention, the vegetable fiber layer is formed of palm fibers.

Furthermore, in the gutter block structure of the present invention, a sidewall surface which serves as the inner surface of the water channel is formed into a stepped shape.

Furthermore, in the gutter block structure of the present invention, a bottom surface which serves as the inner surface of the water channel is formed into an irregular shape.

Furthermore, in the gutter block structure of the present invention, both the sidewalls of the water channel are formed into a curved shape or S-shape.

Furthermore, in the gutter block structure of the present invention, an outer wall surface of the water channel is bulging outward in a curved shape.

Furthermore, a gutter block structure of the present invention has a configuration in which an outer wall.surface is formed into an oval or spherical shape, and parts on an upper side serve as openings for a water channel, and a protrusion is provided in a standing state at the bottom of an inner surface, and a vegetable fiber layer is integrally attached to the inner surface which serves as the water channel.

Furthermore, a water channel of the present invention has a configuration in which a plurality of gutter block structures are coupled or a plurality of properly combined gutter block structures are coupled and installed in an extending state.

Furthermore, in a method of manufacturing a gutter block structure of the present invention, a mold form is framed by a bottom mold form, an inner mold form, outer mold forms and side mold forms, and the method comprises: attaching vegetable fibers to the surface of the inner mold form; casting a concrete material into a space formed by the mold form; and pressing the concrete material from the top by pressing means to firmly bond the concrete material to the vegetable fibers.

In the present invention having the configuration described above, the inner surface of the gutter block structure is covered with the vegetable fiber layer, so that the bare surface of the concrete is not exposed and plants grow at such a place, thus providing a good view.

Moreover, PH of the vegetable fiber layer is low, and PH is about 6, for example, in the case of a palm fiber layer, so that alkali eluted from the concrete (PH: 12 to 13) is neutralized by the palm fiber layer, and the vegetable fiber layer of the gutter block structure effectively functions as a basis of vegetation.

Furthermore, both the concrete material and the vegetable fiber layer have a porous structure, so that if a water channel is formed by the gutter block structures, drainage from soil to the water channel is enabled when the soil contains a large amount of water, whereas water supply from the water channel to the soil is enabled when the soil is dry.

Furthermore, since water is also supplied to the underground, the ground is prevented from sinking in surrounding areas, and a decrease in a groundwater level is prevented, thus making it possible to contribute to the sustaining of the lives of surrounding plants, microorganisms, insects, etc. during a dry season.

Furthermore, plants take root in the porous structure and penetrate therethrough, thereby enabling the growth of the roots, the supply of water from the surrounding soil, and the absorption of nutrients.

Furthermore, in the water channel constructed by coupling the gutter block structures, it is not necessary to provide extra planting spaces such as openings, internal bores and pockets, and the plants take root in the vegetable fiber layer and air gaps of the concrete as described above and are thus stabilized, thereby making it possible to form a green belt. At the same time, because the roots of the plants do not grow large, it is possible to prevent the plants from becoming unnecessarily large, and to save labor in management such as branch cutting and mowing.

Furthermore, the wall surface of the gutter block structure is formed into a stepped shape and provided with, for example, the irregular pattern, such that insects and small animals can freely go in and out of the water channel constructed by coupling the blocks.

Furthermore, the longitudinal wall surface of the gutter block structure can be formed into a curved shape or S-shape to reduce the velocity of water flowing inside the structures. Moreover, the linear part and the curved part can be adjacently arranged to form zones with different flow velocities, thereby enabling the optimization of an environment for growing underwater creatures.

Furthermore, the outer wall surface of the gutter block structure is formed to bulge outward in a curved shape, so that when groundwater is frozen, its upper part first becomes frozen, and the upper part of the water channel is therefore fixed, thereby making it possible to prevent the water channel structure from rising. Subsequently, the lower part may be frozen, in which case expansion pressure is relieved along the curved surface, and this pressure functions to raise the surrounding soil without causing the water channel structure to rise.

Such a phenomenon is the same under normal circumstances, and lateral soil pressure is dispersed along the curved surface, thus making it possible to obtain a block structure which is also structurally effective.

Furthermore, owing to the permeability and the curved structure of the gutter block structure, the flow velocity can be reduced to retain water even during a sudden rainfall, and the water permeates into the soil and can thus be temporarily stored in surrounding areas, so that downstream pressure that causes a flood can be relieved.

### BRIEF DESCRIPTION OF THE DRAWINGS

FIG. 1 is a perspective view of a gutter block structure in one embodiment of the present invention;
FIG. 2 is a perspective view of the gutter block structure in one embodiment of the present invention during manufacture;
FIG. 3 is a sectional view of the gutter block structure in one embodiment of the present invention during manufacture;
FIG. 4(a) is a perspective view of a gutter block structure in an alternative embodiment of the present invention;
FIG. 4(b) is a sectional view showing the relation between the gutter block structure of the present invention and the surrounding soil;
FIG. 4(c) is a sectional view showing the relation between the gutter block structure of the present invention and the surrounding soil;
FIG. 5 is a schematic partial sectional view showing the relation between the gutter block structure of the present invention and the surrounding soil;
FIG. 6 is a perspective view of the gutter block structure in the embodiment of the present invention during manufacture;
FIG. 7 is a sectional view of a gutter block structure in an alternative embodiment of the present invention;
FIG. 8 is a sectional view of a gutter block structure in an alternative embodiment of the present invention;
FIG. 9 is a perspective view of a gutter block structure in an alternative embodiment of the present invention;
FIG. 10 is a sectional view of a gutter block structure in an alternative embodiment of the present invention;
FIG. 11(a) is a longitudinal sectional view of a gutter block structure in an alternative embodiment of the present invention;
FIG. 11(b) is a longitudinal sectional view of a gutter block structure in an alternative embodiment of the present invention;
FIG. 12 is a perspective view of a gutter block structure in an alternative embodiment of the present invention;
FIG. 13(a) is a plan view in an embodiment wherein the gutter blocks of the present invention are connected in a row to form a water channel; and
FIG. 13(b) is a longitudinal sectional view
wherein the gutter blocks of the present invention are connected in a row to form a water channel.

### Best Mode for Carrying out the Invention

A gutter block structure, a water channel formed by the gutter block structures, and a method of manufacturing the gutter block structure of the present invention will hereinafter be described in accordance with embodiments of U-shaped ditches.

### [Embodiment 1]

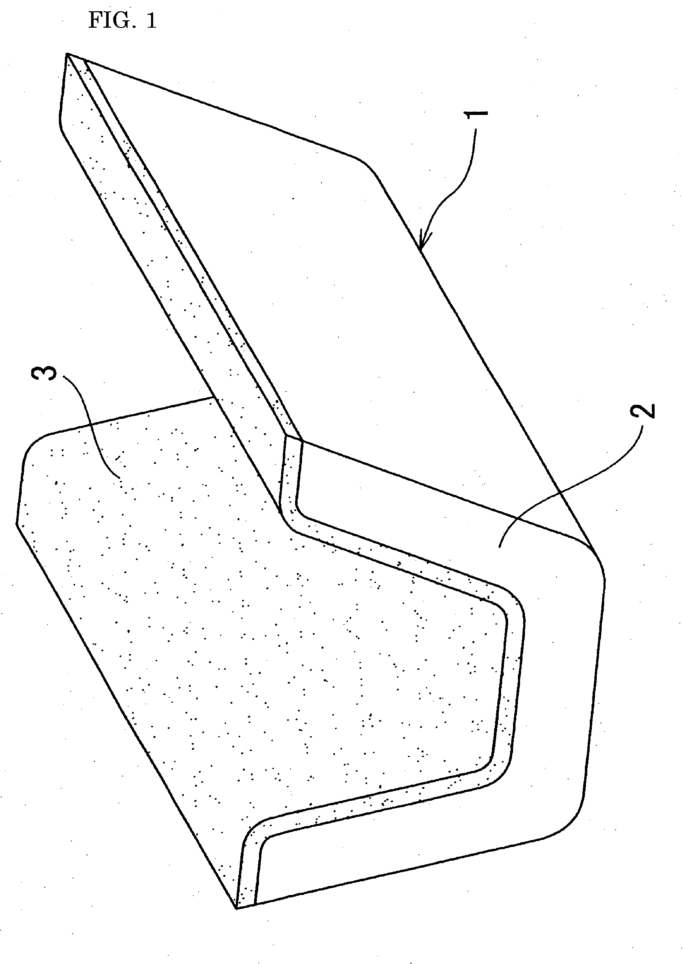

FIG. 1 shows a perspective view of a U-shaped ditch. A U-shaped ditch 1 is formed of a main body 2 made of a concrete material and having a substantially U-shaped section, and a vegetable fiber layer 3 constituting an inner surface.

The main body 2 is formed of the concrete material, and has, as required, reinforcing bars arranged therein in lateral and longitudinal directions, and its cross section is substantially U-shaped so as to have a slightly large opening at the top. The width and longitudinal length of the main body 2 can be properly selected.

A water-permeable concrete material is selected as the concrete material. Artificial lightweight aggregates or industrial wastes can be used for an aggregate of the concrete material. Crushed plastic materials are preferable for the artificial lightweight aggregates, and, for example, it is possible to use a crushed material of a foamed plastic or a volume-reduced plastic made by melting and reducing the volume of the foamed plastic. The industrial wastes that can be used include concrete shells, concrete sludge, waste molten slag, casting slag, casting dust, etc.

Further, an aggregate having a single particle diameter sized at about 20 mm is used such that a porous concrete material having good water permeability can be completed as a whole.

An inorganic bonding material and an organic bonding material are employed for bonding materials of the concrete material, and they are independently used or used in a mixed state. The inorganic bonding materials may be hydraulic inorganic compounds which harden when reacting with water, and are preferably inorganic cements, Ettringite, gypsum, etc., and are more preferably inorganic cements which can easily obtain heat resisting properties, tenacity and durability. The inorganic cements include, for example, portland cement, high-early-strength portland cement, white portland cement, alumina cement, hydraulic cements such as burnt gypsum, blast furnace cement, high sulfate slag cement, latent hydraulic cements such as lime slag cement, silica cement, mixed cements such as fly ash cement..The organic bonding material may be a material which solidifies from a reactively curing or thermoplastic state, and is preferably an epoxy-based resin.

For the vegetable fiber layer 3, it is possible to employ many kinds of dried vegetable fibers, but palm fibers are preferable which have high strength and good power to bond to the concrete material. A sheet of interlaced vegetable fibers is used which has been pressure-formed and which has a predetermined size with a thickness of about 5 mm to 15 mm.

The palm fiber layer has water-absorbing properties, water holding properties and air permeating properties, and individual fibers thereof are curved and are thus interlaced, which makes it easy to retain earth and sand and suitable to capture the seeds and roots or plants and to form a basis for growing the plants.

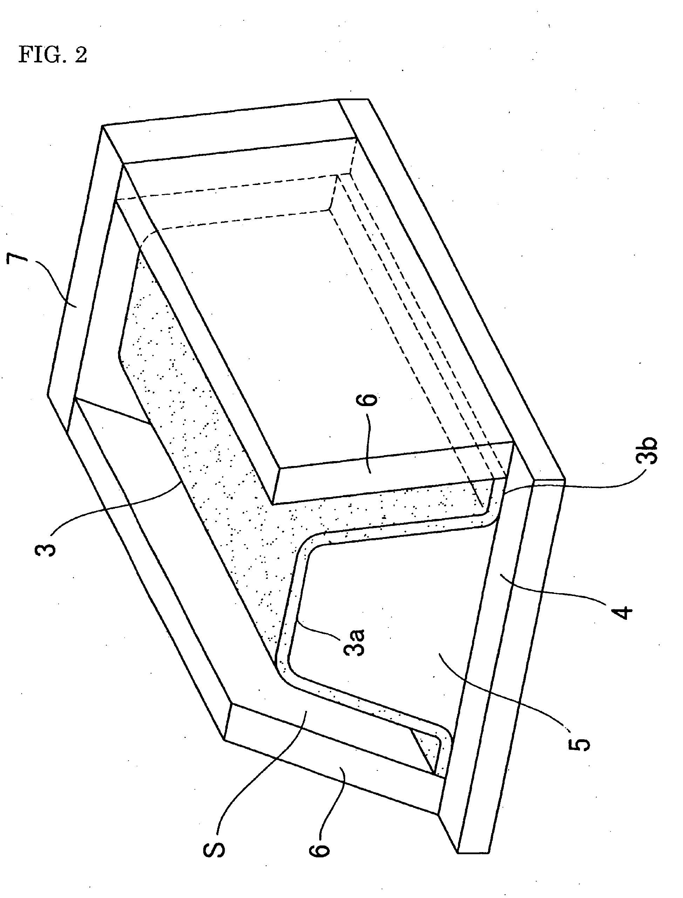

The above-mentioned U-shaped ditch is manufactured by use of a mold form framed by a bottom mold form 4, an inner mold form 5, outer mold forms 6 and side mold forms 7, as shown in FIG. 2. As the bottom mold form 4, a flat mold form is placed on a horizontal surface of the ground or a stand. The inner mold form 5 is placed and fixed on the bottom mold form 4. For the inner mold form 5, a mold form whose outer shape corresponds to the shape of the U-shaped ditch is used.

The outer mold forms 6 are disposed outside the inner mold form 5 with a predetermined space therebetween. The outer mold forms 6 are disposed to stand from the ends or side surfaces of the bottom mold form 4. The above-mentioned predetermined space corresponds to the thickness of the U-shaped ditch. The standing height of the outer mold forms 6 corresponds to the substantial height of the U-shaped ditch.

The side mold forms 7 are disposed at both the ends of the outer mold forms 6. The side mold forms 7 are also disposed to stand from the end or side surface of the bottom mold form 4.

The frame of the mold form enables the formation of the outer shape of the U-shaped ditch and the formation of an inner ditch. Vegetable fibers serving as the vegetable fiber layer 3 are laid on a surface 3a of the inner mold form 5 and on a surface 3b of the bottom mold form 4 exposed inside the frame. The vegetable fibers are laid on the surfaces 3a and 3b of the inner mold form 5 and the bottom mold form 4 using an adhesive, or simply placed thereon.

Reinforcing bars 8 are composed and arranged in lateral and longitudinal directions at a position where a space S is formed by the frame of the bottom mold form 4, the inner mold form 5, the outer mold forms 6 and the side mold forms 7. The reinforcing bars are arranged with spacers so that a predetermined space can be obtained between the reinforcing bar and each mold form. The reinforcing bars 8 can be previously formed as a reinforced frame, and disposed in the mold form space S after the vegetable fiber layer 3 is formed.

After the reinforcing bars 8 are disposed, the frame is completed and firmly fixed from the periphery thereof by, for example, metal fittings so that the frame can resist internal pressure applied thereto in order to prevent the mold forms from losing their shape. Subsequently, concrete is cast into the mold form space S. The concrete is cast while being vibrated during its filling. The vibration is caused by a vibrator put in the concrete, or the vibration is given to the mold form.

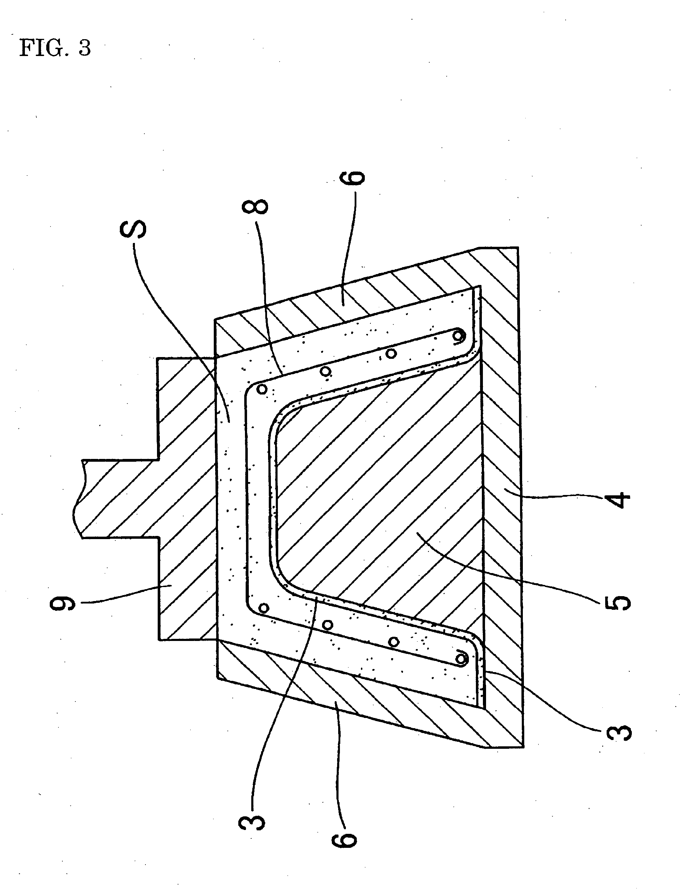

The top of the frame constituted by the mold form is open and serves as a part for casting the concrete. However, as shown in FIG. 3, a press plate 9 is pressed from the top to close the opening, so that the cast concrete is prevented from scattering to outer parts due to the vibration, while the surface side (bottom surface side on completion) of the concrete can be flat.

Furthermore, predetermined pressure can be given by the press plate 9, and a large number of air gaps are formed among the fibers in the vegetable fiber layer 3, so that when the concrete is filled, the inorganic and/or organic bonding materials, the aggregate and the like enter the air gaps among the fibers and interlace with the aggregate, with the result that the vegetable fiber layer 3 is firmly bonded to and integrated with the concrete material.

### [Embodiment 2]

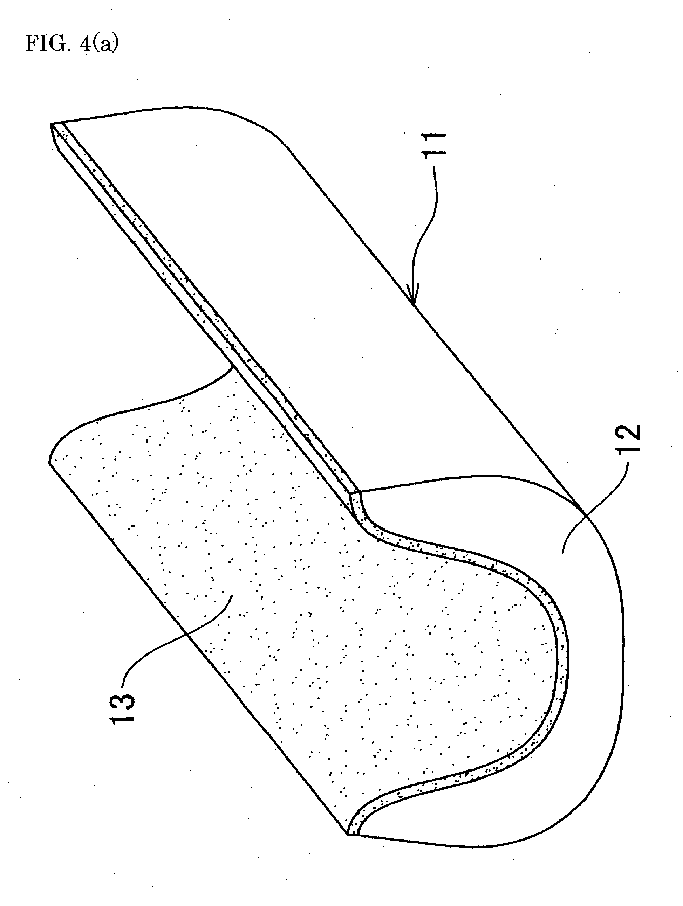

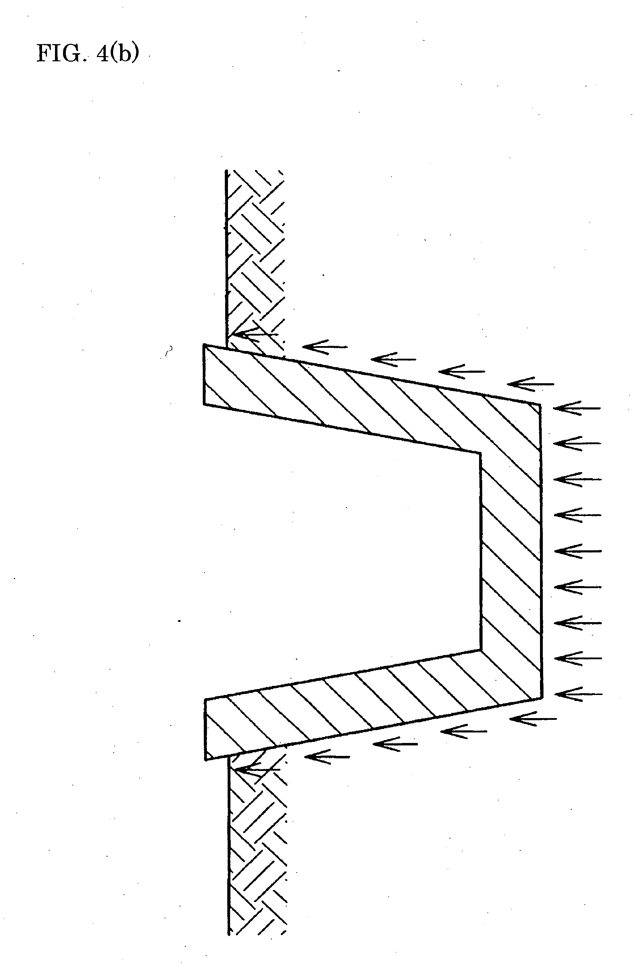

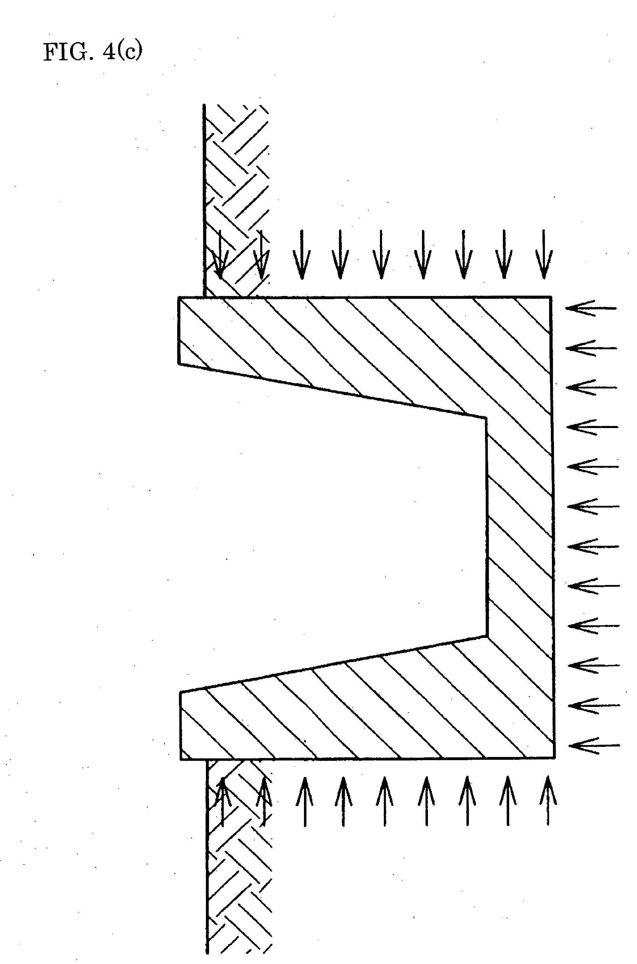

FIG. 4(a) shows a perspective view of a U-shaped ditch in an alternative embodiment. A U-shaped ditch 11 comprises a main body 12 made of a concrete material, and a vegetable fiber layer 13 forming an inner surface.

The main body 12 is formed of a material similar to than in Embodiment 1 described above and has reinforcing bars arranged therein, but its outer shape is in a curved shape so that an outer wall surface thereof bulges outward.

FIG. 4(b) shows an embodiment of a V-shaped ditch, and the V-shaped ditch water channel might rise due to the freezing of surrounding soil in winter. The reason is that the outer walls and bottom surface of the V-shaped ditch water channel are pushed up as indicated by arrows so that the whole water channel is raised.

Furthermore, in an embodiment of a U-shaped ditch shown in FIG. 4(c), the outer wall surfaces of the U-shaped ditch water channel are directly subjected to lateral soil pressure, which causes external force to be loaded on a ditch part.

If the outer wall surfaces shown in FIGS. 4(b) and 4(c) are changed to the outer wall surfaces shown in FIG. 4(a), the soil pressure can be dispersed along the curved surface.

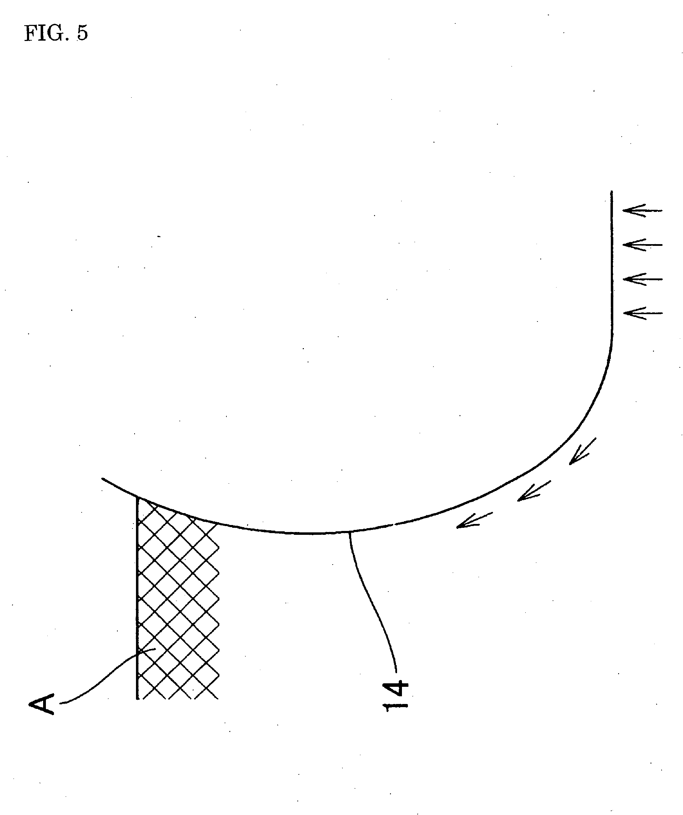

Moreover, as shown in FIG. 5, if the outer wall surface in the upper part is formed as an oval wall surface 14, an upper side A first becomes frozen when freezing occurs, and the water channel is thus fixed. Consequently, even if the lower side of the soil becomes gradually frozen, expansion pressure caused when the lower side becomes frozen is relieved along the curved outer wall surface.

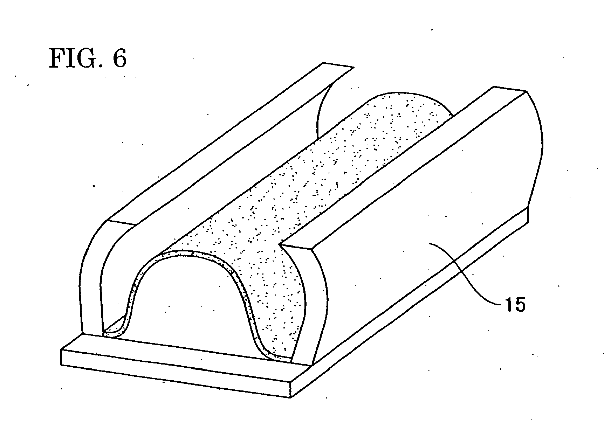

FIG. 6 shows a perspective view of the U-shaped ditch in the present embodiment 2 during manufacture. An outer frame 15 is formed into a curved shape, and it is thus possible to form a U-shaped ditch with bulging outer wall surfaces in accordance with a manufacturing method similar to that in the embodiment 1.

### [Embodiment 3]

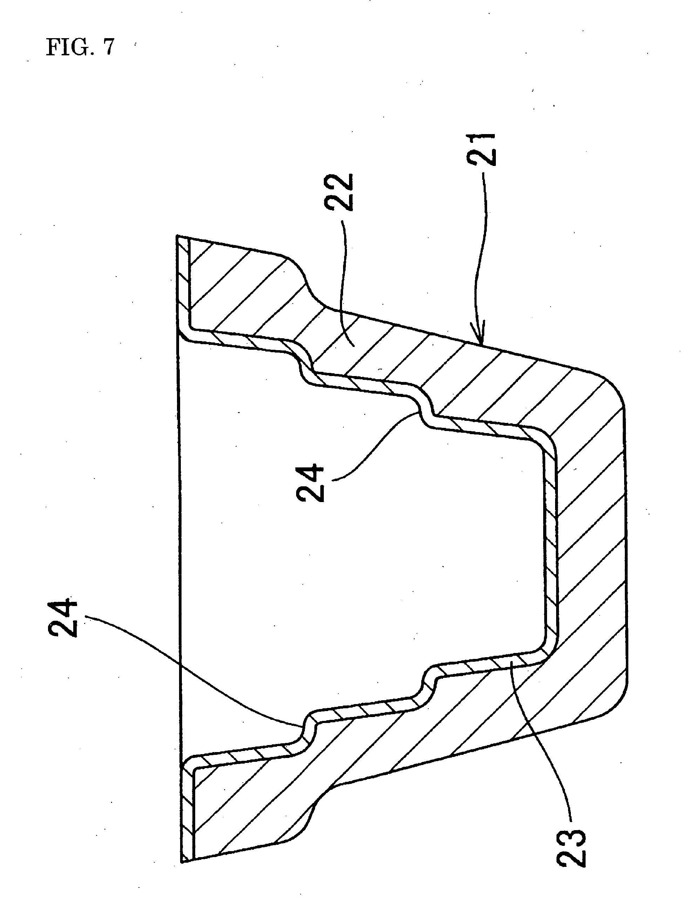

FIG. 7 shows a sectional view of a U-shaped ditch in an alternative embodiment.

A U-shaped ditch 21 comprises a main body 22 made of a concrete material, and a vegetable fiber layer 23 forming an inner surface.

A suitable number of steps 24 are formed in the inner wall surfaces of the main body 22 and the vegetable fiber layer 23. In the embodiment, two steps 24 are provided in the sidewall surface.

When the steps 24 are formed in the surface of the inner mold form 5 in Embodiments 1 and 2, the U-shaped ditch 21 with the steps can be formed in accordance with a manufacturing method similar to that in the embodiments described above.

### [Embodiment 4]

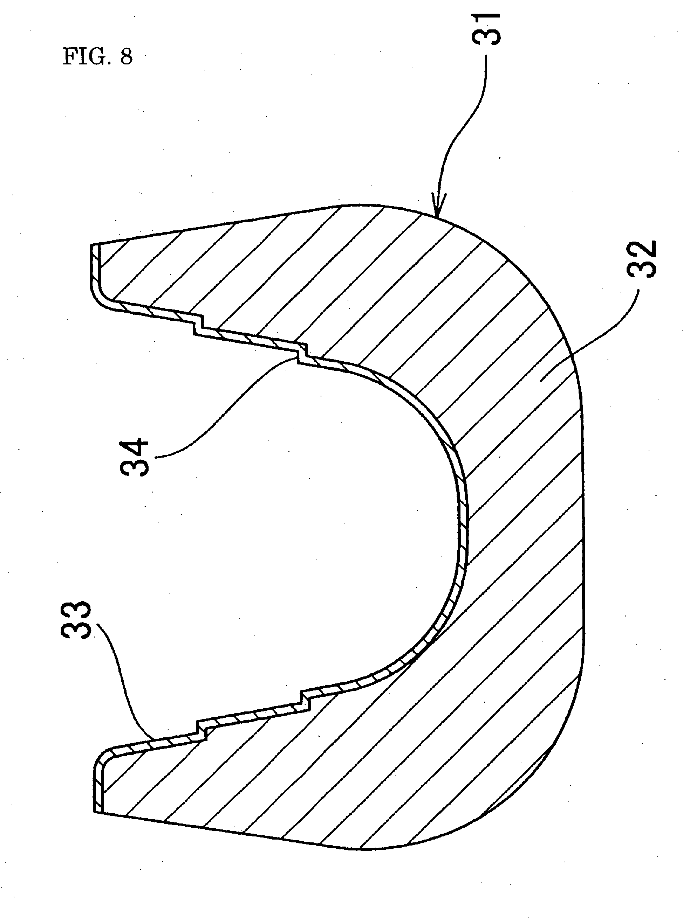

FIG. 8 shows a sectional view of a U-shaped ditch in an alternative embodiment.

A U-shaped ditch 31 comprises a main body 32 made of a concrete material, and a vegetable fiber layer 33 forming an inner surface.

A suitable number of steps 34 are again formed in the inner wall surfaces of the main body 32 and the vegetable fiber layer 33.

Moreover, the outer wall surfaces of the main body 32 are bulging in a curved shape and thus form curved surfaces.

Furthermore, surface sides of corners between the outer wall surfaces and a bottom are also formed to be curved surfaces.

The curved surfaces permit soil pressure to be dispersed along the wall surfaces. An outer bottom can be provided with a flat part as an installation surface.

According to Embodiments 3 and 4, since horizontal parts or gently sloping places can be obtained in the inner wall surface of the U-shaped ditch 21, 31, they serve as footholds to permit insects, small, animals, etc. to easily escape from an inner bottom of the U-shaped ditch.

Furthermore, the vegetable fiber layer 22, 33 on the surface side can have an increased area of contacting the concrete owing to the steps 22, 34, which serves to strengthen the locking with the concrete, thereby increasing the power to bond to the main body 22, 32 and preventing the layers from being easily dropped.

### [Embodiment 5]

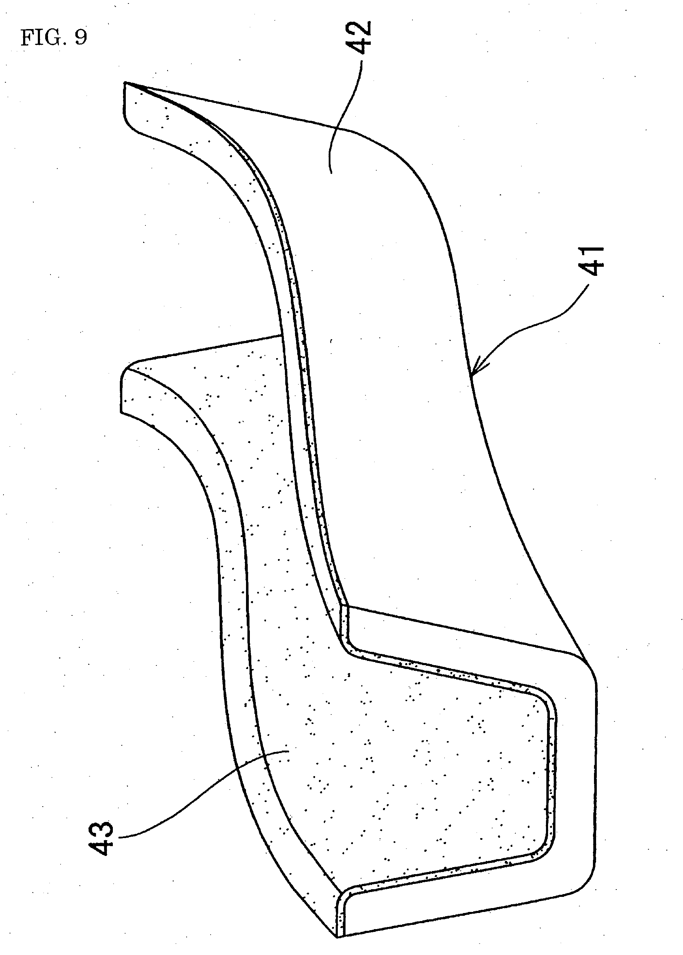

FIG. 9 shows a perspective view of a U-shaped ditch in an alternative embodiment.

A U-shaped ditch 41 comprises a main body 42 made of a concrete material, and a vegetable fiber layer 43 forming an inner surface.

The main body 42 is formed into a curved shape in the longitudinal direction of the ditch. The one shown in FIG. 9 is substantially S-shaped.

A suitable number of U-shaped ditches 41 are coupled to form a water channel. Even when they are installed in a linear place, the curved ditches can be continuously formed or can be used in combination with the linear U-shaped ditches to form a water channel having intermittent curved parts.

According to the U-shaped ditch 41 in Embodiment 5, the velocity of water flowing in the U-shaped ditch 41 can be reduced, and zones with different flow velocities can be provided. This, together with the presence of the vegetable fiber layer 43, permits the environment for growing underwater creatures to be in a fairly good condition.

Furthermore, since the flow velocity is reduced, water can permeate into surrounding soil even during a sudden rainfall owing to the permeable vegetable fiber layer 43 and concrete main body 42, and it is possible to prevent rainwater from concentrating in the U-shaped ditch 41, such that downstream pressure that causes a flood can be relieved.

### [Embodiment 6]

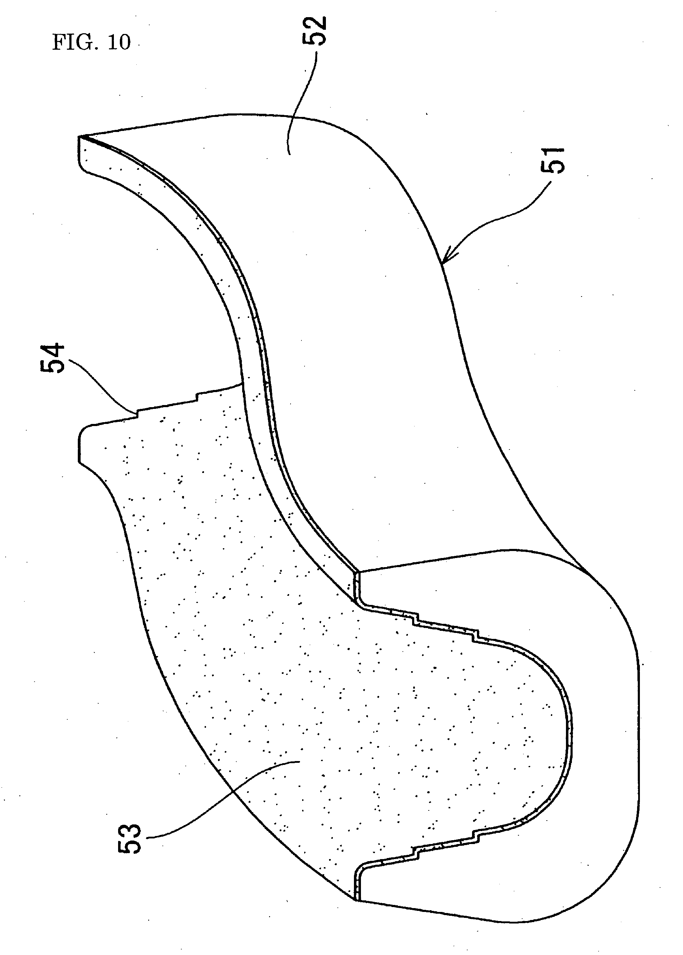

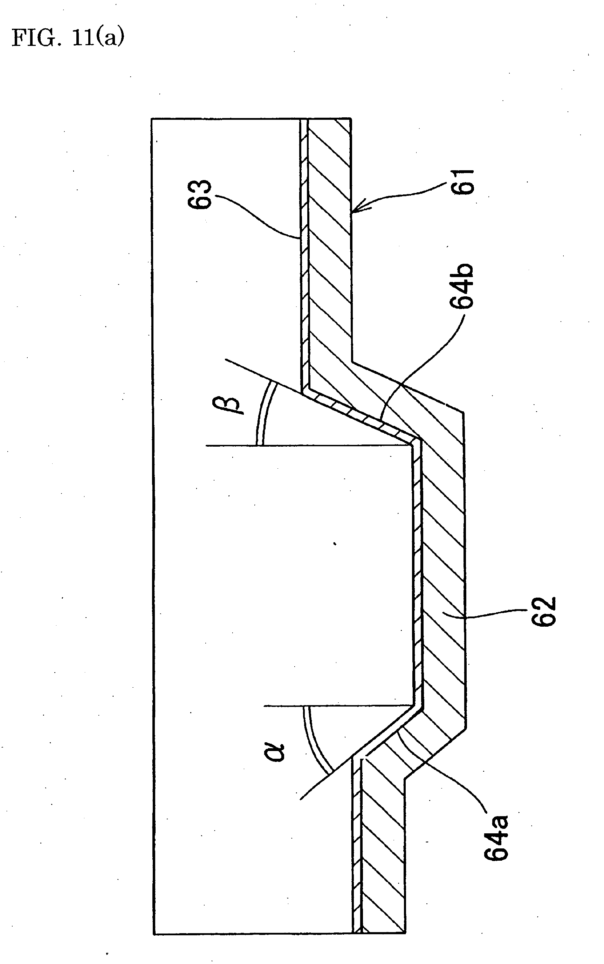

FIG. 10 shows a perspective view of a U-shaped ditch in an alternative embodiment.

The U-shaped ditch in Embodiment 6 has a combination of elements in Embodiments 3, 4 and 5.

A U-shaped ditch 51 comprises a main body 52 made of a concrete material, and a vegetable fiber layer 53 forming an inner surface.

The main body 52 is substantially S-shaped in the longitudinal direction of the ditch.

Furthermore, a suitable number of steps 54 are formed in the inner wall surfaces of the main body 52 and the vegetable fiber layer 53, and the outer wall surface thereof bulges outward in a curved shape.

Furthermore, surface sides of corners between the outer wall surfaces and a bottom are formed to be curved surfaces.

### [Embodiment 7]

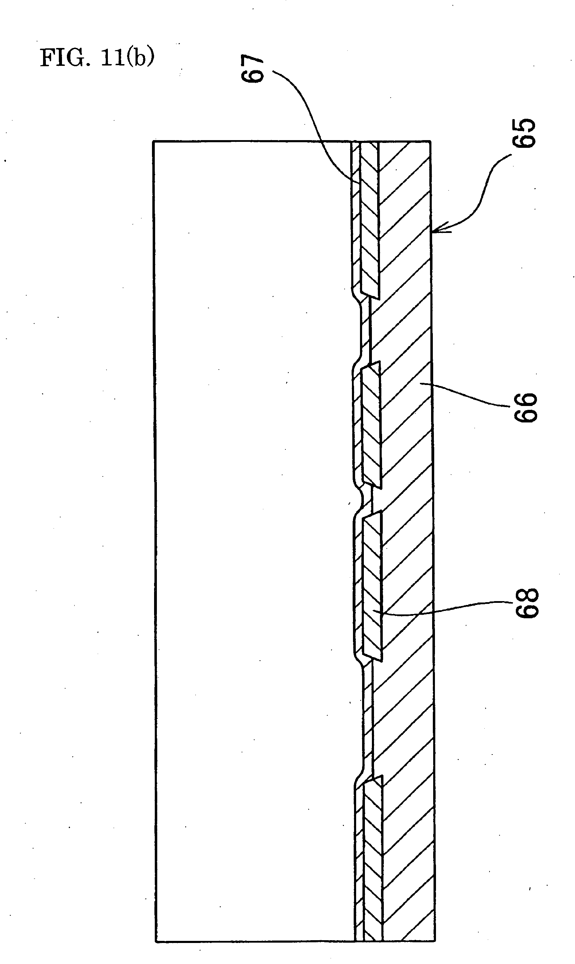

FIG. 11 shows longitudinal sectional views of U-shaped ditches in alternative embodiments.

A U-shaped ditch 61 in FIG. 11(a) comprises a main body 62 made of a concrete material, and a vegetable fiber layer 63 forming an inner surface.

A suitable number of steps 64 are formed in the inner bottom of the main body 62. In the embodiment, there are formed a step 64a which forms a concave portion, and a step 64b which form a convex portion. Concerning angles of inclination forming the steps 64a and 64b, the step 64a has a gentle inclination angle α, while the step 64b has a sharp inclination angle β. The inclination angle can be suitably selected.

A U-shaped ditch 65 in FIG. 11(b) similarly comprises a main body 66 and a vegetable fiber layer 67.

The main body 66 has protrusions 68 arranged with proper spaces in its inner bottom.

In the method of manufacturing the U-shaped ditch shown in Embodiments 1 and 2, stones, artificial stones or other things are disposed or disposed so as to be pressed on the upper surface of a vegetable fiber layer 37 of the inner mold form, and then concrete is cast thereto, thereby making it possible to complete the U-shaped ditch 65 with the irregular inner bottom.

It goes without saying that in the embodiment described above, the U-shaped ditch can be configured in such a manner as to suitably select from the following: forming the steps in the inner surface; forming, into a curved shape, the outer wall surfaces and the corners between the outer wall surfaces and the bottom; forming the longitudinal direction of the ditch in a bending and curved shape; etc.

According to the embodiment described above, the velocity of a water flow can be reduced, and the zones with different flow velocities can be provided. This, coupled with the attachment of the vegetable fiber layer, permits the environment for growing underwater creatures to be in a fairly good condition.

Furthermore, the flow velocity is reduced, and at the same time, water in the vegetable fiber layer and in the ditch of the concrete main body can easily permeate into surrounding soil particularly owing to the steps forming the inclined surfaces.

### [Embodiment 8]

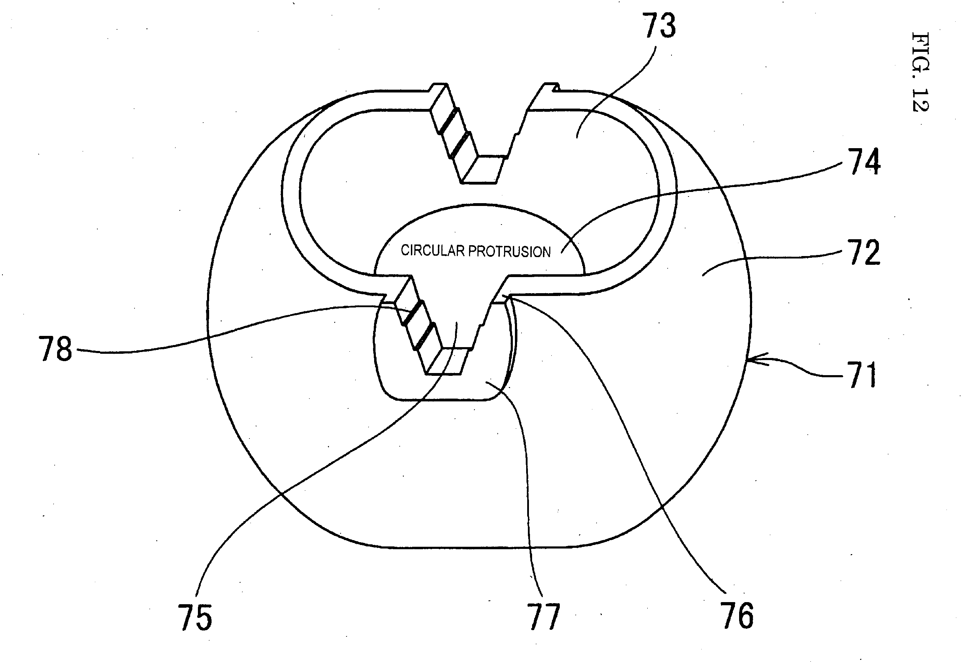

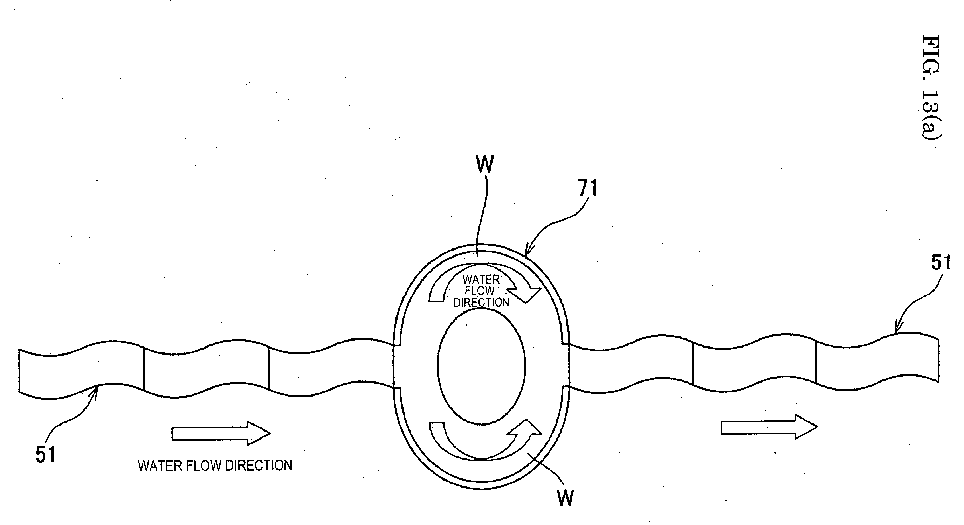

FIG. 12 shows a perspective view of a gutter block structure in an alternative embodiment.

A gutter block structure 71 in FIG. 12 comprises a main body 72 made of a concrete material, and a vegetable fiber layer 73 forming an inner surface.

The main body 72 has a spherical U-shaped ditch (this expression includes an oval shape) whose outer shape is spherical or close to an oval shape. Walls are formed into a curved shape to greatly bulge outward and to a bottom side.

Thus, a height from the top to the bottom is large. Moreover, corners between the walls and the bottom are formed into a curved shape. A hemispherical protrusion 74 is formed so as to protrude from the inside of the bottom.

Openings 75 serving as U-shaped ditches are formed in the spherical sidewall. Since the whole outer wall is spherical, its upper side is formed as an outwardly protruding protrusion 76, and an end wall surface 77 on a short side is vertically formed. Steps 78 are formed in the inner surface of the U-shaped ditch.

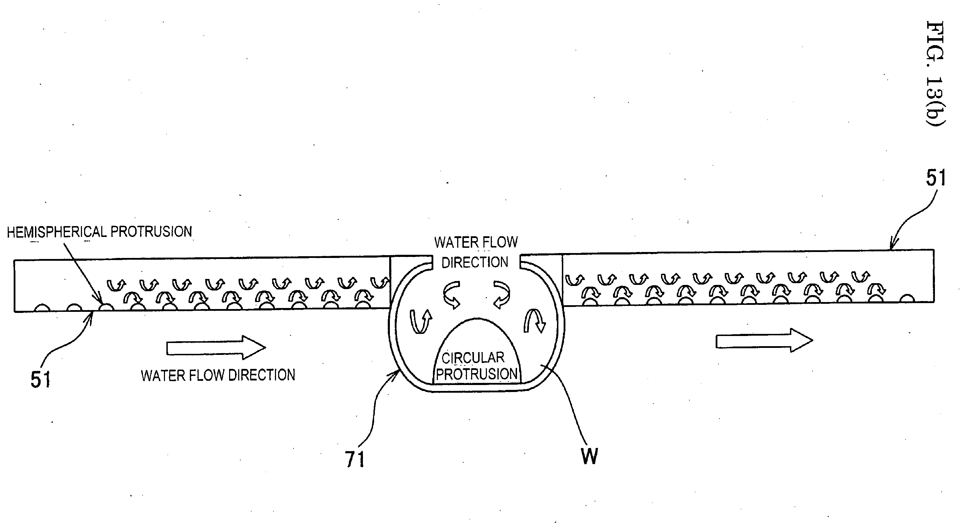

FIG. 13(a) shows a schematic plan view in which the U-shaped ditch 51 in Embodiment 6 and the U-shaped ditch 71 in Embodiments 7 and 8 are combined to form a water channel, and FIG. 13(b) shows a schematic sectional view in a longitudinal direction of a water channel.

A suitable number of U-shaped ditches 51 in an S-shape are connected in a row, and a spherical U-shaped ditch 71 is provided at a proper place in the longitudinal direction, thus forming a water channel.

The U-shaped ditches in the S-shape and the stepped U-shaped ditch having irregularities at the bottom are connected in a row to form a water channel, such that the velocity of water flowing in the water channel can be reduced as described above. Moreover, water which has entered the spherical U-shaped ditch 71 is introduced into a space W formed by the hemispherical protrusion 74 protruding from the bottom and the inner surface, so that the flow velocity is rapidly reduced.

According to the water channel capable of further reducing the water flow, it is possible to further advance the effects such as the stabilization of the growth of plants, an improvement in the permeability of water from the concrete material and the vegetable fiber layer, prevention of the sinkage of the surrounding ground, sustaining of the lives of plants and animals, etc.

### Industrial Applicability

The present invention can be suitably applied when constructing, in a park, field, rural area or the like, a water channel which is capable of obtaining an environment suitable for growing aquatic insects, microorganisms, algae, fish, other vertebrates, etc. and which is capable of reducing a flow velocity.

## Claims

1. A gutter block structure **characterized in that** a vegetable fiber layer is integrally attached to an inner surface of a water-permeable concrete material which serves as a water channel.

2. The gutter block structure according to claim 1, **characterized in that** a bonding material to form the concrete material is an inorganic material and/or an organic material.

3. The gutter block structure according to claim 1, **characterized in that** an aggregate constituting the concrete material is a lightweight aggregate.

4. The gutter block structure according to claim 1, **characterized in that** the vegetable fiber layer is formed of palm fibers.

5. The gutter block structure according to claim 1, **characterized in that** a sidewall surface which serves as the inner surface is formed into a stepped shape.

6. The gutter block structure according to claim 1, **characterized in that** a bottom surface which serves as the inner surface is formed into an irregular shape.

7. The gutter block structure according to claim 1, **characterized in that** both the sidewalls are formed into a curved shape or S-shape.

8. The gutter block structure according to claim 1, **characterized in that** an outer wall surface is formed to bulge outward in a curved shape.

9. A gutter block structure **characterized in that** an outer wall surface is formed into an oval or spherical shape, and parts on an upper side serve as openings for a water channel, and a protrusion is provided in a standing state at the bottom of an inner surface, and a vegetable fiber layer is integrally attached to an inner surface which serves as the water channel.

10. A water channel **characterized in that** a plurality of gutter block structures according to claims 1 to 8 are coupled or a plurality of properly combined gutter block structures are coupled and installed in an extending state.

11. A water channel **characterized in that** a water channel according to claim 10 is combined with a gutter block structure according to claim 9 so that they are coupled and then installed in an extending state.

12. A method of manufacturing a gutter block structure in which a mold form is framed by a bottom mold form, an inner mold form, outer mold forms and side mold forms, the method **characterized by** comprising: attaching vegetable fibers to the surface of the inner mold form; casting a concrete material into a space formed by the mold form; and pressing the concrete material from the top by pressing means to firmly bond the concrete material to the vegetable fibers, thereby forming the block structure.
